# EUROPEAN PATENT APPLICATION

(11) **EP 4 715 078 A1**
(43) Date of publication of application: **25.03.2026**
(21) Application number: 24810950.6
(22) Date of filing: 13.05.2024
(51) Int. Cl.: C22C 38/00, B22F 10/00, B33Y 10/00, B33Y 70/00, C21D 1/76, C21D 8/06, C22C 38/06, G21B 1/05, G21B 1/13

(54) **NON-MAGNETIC AUSTENITIC STEEL, AND MAGNETIC FIELD CONFINEMENT-TYPE NUCLEAR FUSION DEVICE COMPRISING SAME**

(30) Priority: 19.05.2023 JP 2023083060
(71) Applicant: Helical Fusion Co., Ltd., Tokyo 104-0061 (JP)
(72) Inventor: KASADA, Ryuta, Sendai-shi, Miyagi 980-8577 (JP); GENG, Diancheng, Sendai-shi, Miyagi 980-8577 (JP); YU, Hao, Sendai-shi, Miyagi 980-8577 (JP); KONDO, Sosuke, Sendai-shi, Miyagi 980-8577 (JP); MIYAZAWA, Junichi, Tokyo 104-0061 (JP)
(74) Representative: Cabinet Netter
(86) International application number: PCT/JP2024/017632
(87) International publication number: WO 2024/241943

(57) **Abstract**

A magnetic confinement type fusion device 1 includes a first component (for example, a blanket 20) containing non-magnetic austenitic steel. The non-magnetic austenitic steel contains 28 mass% or more and 31 mass% or less of Mn, 5 mass% or more and 7 mass% or less of Al, 0.5 mass% or more and 2 mass% or less of Si, 0 mass% or more and 0.3 mass% or less of C, 0 mass% or more and 1.5 mass% or less of Y₂O₃, and a remainder of Fe and unavoidable impurities.

## Description

### TECHNICAL FIELD

The present invention relates to non-magnetic austenitic steel and a magnetic confinement type fusion device containing the non-magnetic austenitic steel.

### BACKGROUND ART

Japanese Patent Application Laid-Open No. 2021-133804 (Patent Document 1) describes using low activation ferritic steel (such as F82H) as a housing material for a blanket for nuclear fusion.

### RELATED ART DOCUMENT

### PATENT DOCUMENT

Patent Document 1: Japanese Patent Application Laid-Open No. 2021-028231

### SUMMARY OF THE INVENTION

### PROBLEMS TO BE SOLVED BY THE INVENTION

A magnetic confinement type fusion device is a device that continuously generates a fusion reaction by confining plasma using magnetic field lines. Therefore, a non-magnetic material is preferably used as a material constituting a component or a member incorporated in the magnetic confinement type fusion device. However, in addition to being non-magnetic, a material for a fusion device needs to have improved characteristics such as oxidation resistance, neutron radiation resistance, and mechanical strength.

An object of the present invention is to provide non-magnetic austenitic steel suitable as a material contained in a magnetic confinement type fusion device and a magnetic confinement type fusion device using the non-magnetic austenitic steel.

### MEANS FOR SOLVING THE PROBLEMS

Non-magnetic austenitic steel according to an embodiment contains 28 mass% or more and 32 mass% or less of Mn, 5 mass% or more and 7 mass% or less of Al, 0.5 mass% or more and 2 mass% or less of Si, 0 mass% or more and 0.3 mass% or less of C, 0 mass% or more and 1.5 mass% or less of yttrium oxide (Y₂O₃), and a remainder of Fe and unavoidable impurities.

A magnetic confinement type fusion device according to another embodiment includes a first component containing non-magnetic austenitic steel. The non-magnetic austenitic steel contains 28 mass% or more and 32 mass% or less of Mn, 5 mass% or more and 7 mass% or less of Al, 0.5 mass% or more and 2 mass% or less of Si, 0 mass% or more and 0.3 mass% or less of C, 0 mass% or more and 1.5 mass% or less of Y₂O₃, and a remainder of Fe and unavoidable impurities.

### EFFECTS OF THE INVENTION

According to a representative embodiment of the present invention, it is possible to obtain austenitic steel suitable as a material contained in a magnetic confinement type fusion device.

### BRIEF DESCRIPTIONS OF THE DRAWINGS

[FIG. 1] is a cutaway perspective view showing a configuration example of a magnetic confinement type fusion device according to an embodiment.
[FIG. 2] is a graph showing mass gain curves of Example 1 and Comparative Example 1.
[FIG. 3] is a view showing an observation image of a sample of Example 1 obtained by a scanning transmission electron microscope (STEM).
[FIG. 4] is a view showing an observation image of the sample of Example 1 obtained by an energy dispersive X-ray analyzer (EDS).
[FIG. 5] is an explanatory view showing a forged material of austenitic steel manufactured as Example 2.
[FIG. 6] is an explanatory view showing results of an X-ray crystal structure analysis performed for each of test pieces of the austenitic steel of Example 2 subjected to a thermal aging test at 700°C for 10 hours, 100 hours, and 1,000 hours.
[FIG. 7] is an explanatory view showing results of an X-ray crystal structure analysis performed on the test pieces of the austenitic steel of Example 2 before the thermal aging test.
[FIG. 8] is an explanatory view showing results of an analysis performed using an electron beam microanalyzer (EMPA) for each of the test pieces of the austenitic steel of Example 2 subjected to the thermal aging test at 700°C for 10 hours, 100 hours, and 1,000 hours.
[FIG. 9] is an explanatory view showing results of evaluating nanoindentation hardness of the austenitic steels according to Example 2 and Comparative Example 2.
[FIG. 10] is an explanatory view showing results of evaluating elastic moduli of the austenitic steels according to Example 2 and Comparative Example 2.
[FIG. 11] is an explanatory view showing results of an X-ray crystal structure analysis in six regions from a circumference toward a center in a forged material of the austenitic steel of Example 2.
[FIG. 12] is an explanatory view showing results of a tensile strength test on austenitic steels according to Example 3 and Comparative Example 3.

### DETAILED DESCRIPTION OF PREFERRED EMBODIMENTS

The inventors of the present application have conducted research and development of a fusion device that causes a fusion reaction by confining high-temperature and high-density plasma in a furnace. As a part of this, non-magnetic austenitic steel suitable for application as a structural material of a fusion device or a material of a component such as a blanket or a diverter disposed in the fusion device has been examined.

### <Definition of Terms>

First, definitions of terms used in the present application will be described.

The "fusion device" is a device that extracts energy generated using a fusion reaction to the outside.

The "magnetic confinement type fusion device" is a fusion device adopting a method of confining plasma for generating a fusion reaction by magnetic field lines. The magnetic confinement type includes various types such as a "tokamak type" and a "helical type" according to the shape of magnetic field lines. In the present application, types that confine plasma by magnetic field lines are collectively referred to as the "magnetic confinement type".

The term "non-magnetic" means a state in which a material does not have properties of a magnetic material and a state in which the material can be considered to be substantially not a magnetic material. The state in which the material can be considered to be substantially not a magnetic material refers to a case in which the material has sufficiently small characteristics of a magnetic material in the use environment, and their influence is thus negligibly small. For example, as for a material used in the magnetic confinement type fusion device, it refers to a case in which the magnetic properties of the material have a negligibly small influence on the magnetic field lines confining plasma. In addition, in a case in which the non-magnetic state is expressed in terms of "relative permeability", when the relative permeability of the material is in a range of 1.00 or more and 1.02 or less, the material can be said to be a non-magnetic material.

The relative permeability of steel can be measured by, for example, a method using a vibrating sample magnetometer.

### <Magnetic Confinement Type Fusion Device>

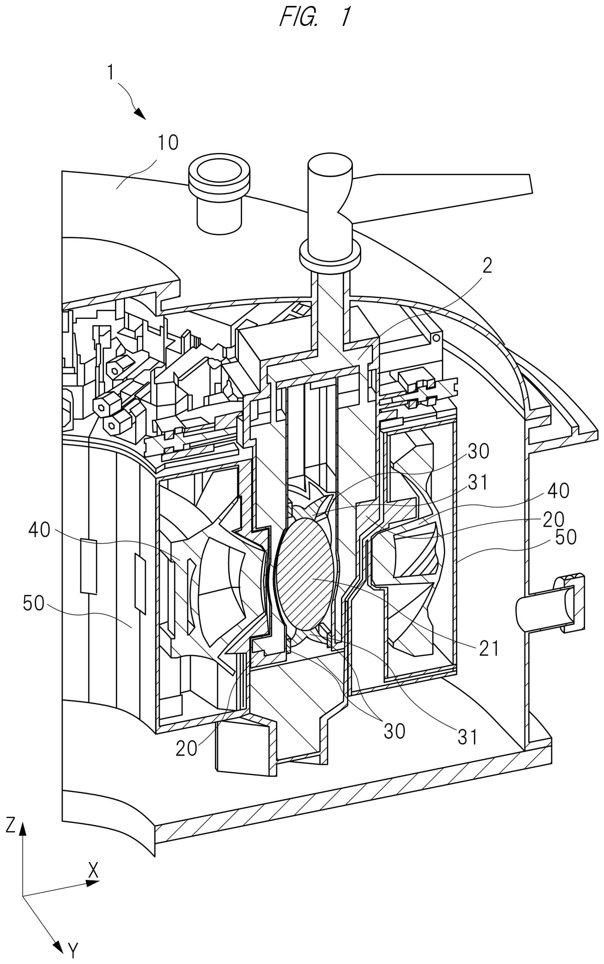

FIG. 1 is a cutaway perspective view showing a configuration example of a magnetic confinement type fusion device according to an embodiment. A fusion device 1 shown in FIG. 1 is a magnetic confinement type fusion device, and is specifically, a helical fusion device.

An X direction, a Y direction, and a Z direction are shown in FIG. 1. The X direction, the Y direction, and the Z direction intersect with each other. In the example shown in FIG. 1, the X direction, the Y direction, and the Z direction are orthogonal to each other.

The fusion device 1 has a vacuum vessel 10, a blanket 20, a diverter 30, a magnet (superconducting magnet) 40, and a cryostat 50. Each of the blanket 20, the diverter 30, the magnet 40, and the cryostat 50 is disposed in the vacuum vessel 10. The diverter 30 is disposed inside the blanket 20.

The vacuum vessel 10 is a vessel for housing components for continuously generating a fusion reaction. In the fusion reaction, hydrogen isotopes such as deuterium and tritium are used as raw materials. Therefore, the inside of the vacuum vessel 10 needs to be maintained in an ultra-high vacuum state (for example, about 10⁻⁵ Pa or less) before a fusion plasma operation is started. The vacuum vessel 10 is made of, for example, stainless steel.

As a modification, the vacuum vessel 10 may be made of non-magnetic austenitic steel to be described later. However, the vacuum vessel 10 is disposed away from fusion plasma 21, and the blanket 20 is interposed between the vacuum vessel 10 and the fusion plasma 21. Therefore, oxidation resistance or neutron radiation resistance required for the vacuum vessel 10 is relatively lower than oxidation resistance or neutron radiation resistance required for the blanket 20.

The blanket 20 is a component constituting a flow path of a liquid metal 2. The fusion plasma 21 forms an annular shape (torus shape) in an X-Y plane including the X direction and the Y direction in FIG. 1. The blanket 20 is disposed to interpose the fusion plasma 21 in the X direction or the Y direction. In other words, when the fusion device 1 is operated, the fusion plasma 21 is interposed by the blanket 20 in the X direction or the Y direction.

In the example shown in FIG. 1, the liquid metal 2 flowing inside the blanket 20 is irradiated with neutrons generated in the fusion plasma 21. In other words, the blanket 20 functions to receive and shield the neutrons generated in the fusion plasma 21.

The liquid metal 2 serves as a refrigerant that transmits heat generated by neutron irradiation to the outside. In other words, the blanket 20 functions to transmit thermal energy generated by neutron irradiation to the outside (for example, a power-generating facility such as a turbine generator) via the refrigerant (liquid metal 2).

In addition, when irradiated with neutrons, the liquid metal 2 serves as a fuel source that generates tritium, which is fuel for a fusion reaction. Tritium is produced by a nuclear spallation reaction occurring by neutron irradiation of lithium contained in the liquid metal 2. In other words, the blanket 20 functions as a raw material supply path for producing fuel for a fusion reaction.

From the viewpoint of efficient conversion of neutrons generated in the fusion plasma 21 into thermal energy, the distance between the blanket 20 and the fusion plasma 21 is preferably short. Therefore, non-magnetic austenitic steel to be described later is preferable as a material constituting the blanket 20.

The diverter 30 is a component (heat-receiving device) provided in a portion of the blanket 20 that is in contact with diverter plasma 31. A part of the fusion plasma 21 is connected to a part of a surface of the blanket 20 by magnetic field lines. This is called diverter plasma. The charged particles in the plasma move along the magnetic field lines. The diverter 30 uses the above characteristics of the charged particles and suppresses the intrusion of impurities into the fusion plasma 21 as charged particles.

The diverter 30 is disposed between the blanket 20 and the fusion plasma 21. Accordingly, the distance between the diverter 30 and the fusion plasma 21 is short. Therefore, non-magnetic austenitic steel to be described later is preferable as a material constituting the diverter 30.

The magnet 40 is a component for generating magnetic field lines for maintaining the fusion plasma 21 in a pre-designed shape. The magnet 40 is a superconducting electromagnet formed by stacking a superconducting wire rod (not shown) made of a superconducting material. The shape of the magnet 40 is modified in various manners according to the shape of the fusion plasma 21.

The cryostat 50 is a container that houses the magnet 40. In addition, the cryostat 50 is a heat shield for maintaining a superconducting state of the magnet 40.

Among the plurality of components (blanket 20, diverter 30, magnet 40, and cryostat 50) of the fusion device 1 shown in FIG. 1, the blanket 20 and the diverter 30 preferably contain non-magnetic austenitic steel to be described later.

In the fusion device 1, the components containing non-magnetic austenitic steel to be described later are modified in various manners. For example, only one of the blanket 20 and the diverter 30 may contain non-magnetic austenitic steel to be described later. Otherwise, a component other than the blanket 20 and the diverter 30 may contain non-magnetic austenitic steel to be described later.

### <Non-Magnetic Austenitic Steel>

Hereinafter, austenitic steel according to the present embodiment will be described.

The austenitic steel according to the present embodiment is an alloy containing iron (Fe), manganese (Mn), aluminum (Al), and silicon (Si) as essential components.

Mn is an essential component for achieving single phase stabilization (hereinafter, also simply referred to as "stabilization") in austenitic steel (FCC phase) at a high temperature together with Al to be described later. In order to stabilize the austenitic steel, Mn and Al need to have a predetermined relationship in their contents, and these elements have a positive correlation in their contents. That is, in a case in which Mn is increased, Al also needs to be increased, and in a case in which Mn is decreased, Al also needs to be decreased.

Mn is an element used in place of nickel (Ni), which has been blended to stabilize austenitic steel. In the present embodiment, by increasing the content of Mn and setting the content of other components in a predetermined range, austenitic steel to be obtained can be made into a non-magnetic alloy.

Making the austenitic steel non-magnetic has a very important meaning in using it as a material of the fusion device 1. In particular, in the magnetic confinement type fusion device, as described above, magnetic field lines formed by the magnet 40 are used to confine plasma. Therefore, in a case in which a magnetic material is disposed near the fusion plasma 21 and the diverter plasma 31, the magnetic material may affect the shape of the magnetic field lines for confining plasma, and a problem may occur. The austenitic steel according to the present embodiment suppresses the occurrence of such a problem, and enables stable operation of the fusion device.

In addition, in a case in which non-magnetic austenitic steel is used as the material of the fusion device 1, the following characteristics are preferably high. The components (especially the blanket 20 and the diverter 30) disposed near the fusion plasma 21 preferably have high oxidation resistance (corrosion resistance) since the components are placed in a high temperature environment. Although details will be described later, the non-magnetic austenitic steel according to the present embodiment can obtain high oxidation resistance.

The components (especially the blanket 20 and the diverter 30) disposed near the fusion plasma 21 preferably have high neutron irradiation resistance since the components are irradiated with a large amount of neutrons.

In addition, preferably, as a common requirement for any component, the components can obtain such a mechanical strength that the components are not damaged.

The content of Mn is, for example, preferably 28 mass% or more and 31 mass% or less, and more preferably 29 mass% or more and 30.5 mass% or less. In a case in which the content is less than 28 mass%, the content of Al also needs to be relatively decreased, and there is a concern that the austenitic steel may not obtain sufficient oxidation resistance (corrosion resistance). Meanwhile, in a case in which the content is more than 31 mass%, there is a concern that the stability of the austenitic steel may decrease (in particular, a β-Mn phase is generated at a high temperature) from the balance with other components. In addition, the austenitic steel containing Mn at a high ratio of 28 mass% or more as described above exhibits a higher mechanical strength than chromium nickel-based stainless steel containing Ni and Cr as elements for stabilizing austenite.

Al is a component that improves oxidation resistance (corrosion resistance) of austenitic steel and stabilizes the austenitic steel, and is an essential component. As described above, the content of Al has a positive correlation with Mn in terms of maintaining the stability of the austenitic steel.

In a case in which the austenitic steel is used under high temperature conditions as in the fusion device 1, Al can form an oxide coating film containing aluminum oxide (Al₂O₃ or the like) on the surface layer of the austenitic steel and improve the oxidation resistance. According to the examination of the inventors of the present application, scale such as magnesium oxide and iron oxide is formed on the outermost layer of the surface layer of the non-magnetic austenitic steel, and an oxide coating film containing aluminum oxide is densely formed along the interface between the scale and the base material. Therefore, it is thought that the formation of the dense oxide coating film containing aluminum oxide suppresses the intrusion of oxygen into the base material and the movement of the elements constituting the base material to the surface. In the present embodiment, it is thought that, by the coexistence of Si to be described later, a denser film is formed and the oxidation resistance (corrosion resistance) is improved.

The content of Al is preferably 5 mass% or more and 7 mass% or less, and more preferably 5.5 mass% or more and 6.5 mass% or less. In a case in which the content is less than 5 mass%, there is a concern that the austenitic steel may not obtain sufficient oxidation resistance (corrosion resistance). Meanwhile, in a case in which the content is more than 7 mass%, there is a concern that the stability of the austenitic steel may decrease (in particular, the Mn content is increased, and thus a β-Mn phase is generated at a high temperature) from the balance with other components. As will be described later as Example 3, austenitic steel containing Al in a range of 5 mass% or more and 7 mass% or less, particularly preferably 5.5 mass% or more and 6.5 mass% or less, exhibits a high mechanical strength.

Si is a component that improves oxidation resistance (corrosion resistance) of austenitic steel and stabilizes the austenitic steel, and is an essential component. As described above, in a case in which Si is used under high temperature conditions as in the fusion device, it is thought that Si acts as a component that more densely forms an oxide coating film containing aluminum oxide and improves the corrosion resistance of the austenitic steel.

The content of Si is, for example, preferably 0.5 mass% or more and 2 mass% or less, and more preferably 0.8 mass% or more and 1.5 mass% or less. In a case in which the content is less than 0.5 mass%, there is a concern that the austenitic steel may not obtain sufficient oxidation resistance (corrosion resistance). Meanwhile, in a case in which the content is more than 2 mass%, there is a concern that the strength characteristics may deteriorate. In addition, austenitic steel containing Si as an essential component in a range of 0.5 mass% or more and 2 mass% or less, preferably 0.8 mass% or more and 1.5 mass% or less, exhibits a high mechanical strength. Carbon (C) is a component that increases the strength of austenitic steel, and is an optional component. C may or may not be contained.

In a case in which C is contained, the content of C is preferably 0.3 mass% or less. In a case in which C is contained in an amount of more than 0.3 mass%, an austenite forming component is decreased, a BCC phase (ferrite phase) is likely to be generated, and the stability of the austenitic steel is lowered. Moreover, there is a concern that magnetic properties may be exhibited.

However, in a case in which the content of C is small, that is, not more than 0.3 mass%, C functions as a component for stabilizing the austenitic steel. In the present embodiment, since the austenitic steel contains a large amount of Mn for stabilization, the austenitic steel can be stabilized by containing C at a ratio of 0.3 mass% or less.

Yttrium oxide (Y₂O₃) is a component that improves the strength characteristics of austenitic steel, and is an optional component. By blending Y₂O₃, the oxidation resistance (corrosion resistance) and neutron irradiation resistance can be improved. Here, the neutron irradiation resistance means properties of causing a highly radioactive substance to be generated after neutron radiation in a fusion device, and by blending Y₂O₃, the neutron irradiation resistance can be reduced by a sink action against irradiation defects.

As described above, C acts as a component that increases the strength of the austenitic steel, but in the present embodiment, the content of C is set to be low in consideration of the stability of the austenitic steel at a high temperature. Therefore, in the present embodiment, Y₂O₃ is preferably blended from the viewpoint of improving the strength characteristics of the austenitic steel. In a case in which Y₂O₃ is blended, the content of Y₂O₃ is, for example, preferably 0.1 mass% or more and 1.5 mass% or less, and more preferably 0.15 mass% or more and 1 mass% or less.

Ni is a component for achieving single phase stabilization in austenitic steel, and is an optional component. As described above, in the present embodiment, since a large amount of Mn is contained as an essential component, Ni may be slightly contained. However, there is no problem even if Ni is not contained from the viewpoint of the stability of the austenitic steel. In addition, from the viewpoint of suppressing the magnetic properties of the austenitic steel, Ni is preferably substantially not contained. Here, the phrase "substantially not contained" means that the content of Ni is 1,000 ppm or less.

Cr is a component that improves oxidation resistance (corrosion resistance) of austenitic steel, and is an optional component. However, in a case in which the content of Cr is increased, there is a concern that a σ phase may be generated, and it is conceived that Cr may adversely affect oxidation resistance (corrosion resistance), mechanical characteristics, and sometimes magnetic properties. In the present embodiment, Cr is preferably substantially not contained. Here, the phrase "substantially not contained" means that the content of Cr is 0.5 mass% or less.

The austenitic steel having the above-described composition is in a single FCC phase state, and becomes non-magnetic austenitic steel. Making the austenitic steel into a non-magnetic material enables the fusion device to be stably operated as described above. Here, the definition of the term "non-magnetic" is as described above.

The austenitic steel having the above-described composition according to the present embodiment is a non-magnetic material having very good oxidation resistance (corrosion resistance) at a high temperature. Furthermore, by blending Y₂O₃, the austenitic steel can be prepared as a material having improved strength characteristics and neutron irradiation resistance. The austenitic steel is a very suitable material as a material forming the members of the fusion device.

In particular, as described above, the austenitic steel of the present embodiment is characterized in that the Mn content is high and Al and Si are essential components, which effectively improve oxidation resistance (corrosion resistance) at a high temperature. This is considered to be because an oxide coating film of aluminum oxide formed at a high temperature is denser than an alloy that has been known, and as shown in Example 1 to be described later, a temporary mass gain occurs at the initial stage of the oxidation treatment, but the subsequent mass gain is extremely suppressed. That is, it is thought that in the austenitic steel of the present embodiment, a dense oxide coating film is formed, and as a result, once the oxide coating film is formed, the oxidation and intrusion from the outside and the movement of Fe and Mn from the inside of the austenitic steel to the surface side are effectively suppressed.

In addition, as described above, the austenitic steel of the present embodiment has a high Mn content and contains Al and Si as essential components, so that a high mechanical strength can be obtained. As described in Example 2 to be described later, a high mechanical strength can be obtained even in austenitic steel containing no C or Y₂O₃, for example.

As for the austenitic steel according to the present embodiment, the method of manufacturing this type of alloy can be used without particular limitation. That is, the above-described raw material metals are mixed so that their contents are as described above, and are heated and melted at a high temperature, and then forging, casting, or the like is performed to prepare the austenitic steel. Furthermore, the austenitic steel can be machined into an austenitic steel component by rolling, a heat treatment, or the like for obtaining a desired shape and a desired form. In this case, each treatment can be performed under conditions that are usually adopted.

In addition, the austenitic steel can also be obtained by powder metallurgy. In the powder metallurgy, a metal powder as the raw material described above is put into a mold, subjected to compression molding by pressing, and then heated at a high temperature and sintered, or a metal powder as the raw material is mechanically mixed (mechanical alloying) with a ball mill device and sintered, so that the austenitic steel can be prepared.

In a case in which Y₂O₃ is used as the raw material, the austenitic steel can be manufactured as a dispersion strengthened alloy by powder metallurgy such as mechanical alloying. The obtained austenitic steel can be further heated, and formed and machined into a desired shape by hot forging into various shapes.

The fusion device 1 described with reference to FIG. 1 is a helical fusion device. In the helical fusion device 1, the fusion plasma 21 has a complicated shape compared to a tokamak fusion device. Therefore, the blanket 20 and the diverter 30 of the fusion device 1 have complicated shapes. As a method of manufacturing a component having such a complicated shape, an additive manufacturing (AM) technique of three-dimensionally stacking a raw material is effective.

In a case in which a manufacturing method using powder metallurgy is adopted, a powder can be used as a raw material, and thus a molding method using an additive manufacturing (AM) technique is particularly effective.

### EXAMPLES

Hereinafter, the austenitic steel of the present embodiment will be described in greater detail with reference to examples, comparative examples, and examination examples, but the present invention is not limited to these examples.

### (Example 1)

A raw material powder was prepared in a glove box with an argon atmosphere. Next, ball-milling pulverization was performed on the prepared raw material powder at 300 rpm for 48 hours using a planetary ball mill so that the ratio of balls to powder was 10:1. The powder as pulverized was solidified by a spark plasma sintering (SPS) method at 1,050°C at a constant axial pressure of 50 MPa. Finally, the cylinder as sintered was hot-rolled at 1,050°C with a forging ratio of 3:1, annealed at 1,050°C for 2 hours, and subsequently rapidly cooled with water to obtain austenitic steel having a composition of Fe-30Mn-6Al-0.3C-1Si-1Y₂O₃ by mass%.

### (Comparative Example 1)

Austenitic steel having a composition of Fe-30Mn-6Al-0.3C-1Cr-1Y₂O₃ by mass% was obtained in the same method as in Example 1.

### [Oxidation Resistance Test]

For each of the austenitic steels obtained in Example 1 and Comparative Example 1, a sample as rolled was cut by wire electric discharge machining and polished by 1 µm diamond spraying, and had a final size of 9 mm×9 mm×0.5 mm. A hole having a diameter of 1.5 mm was formed, and the sample was hooked using an Al₂O₃ rod and subjected to an oxidation test at 600°C under an air atmosphere using a muffle furnace. Mass gains due to oxidation were measured at a plurality of exposure times (1, 4, 9, 16, 25, 49, 100, and 225 hours) using a precision electronic balance (trade name: MC 5, manufactured by Sartorius AG) with a resolution of 1 µg.

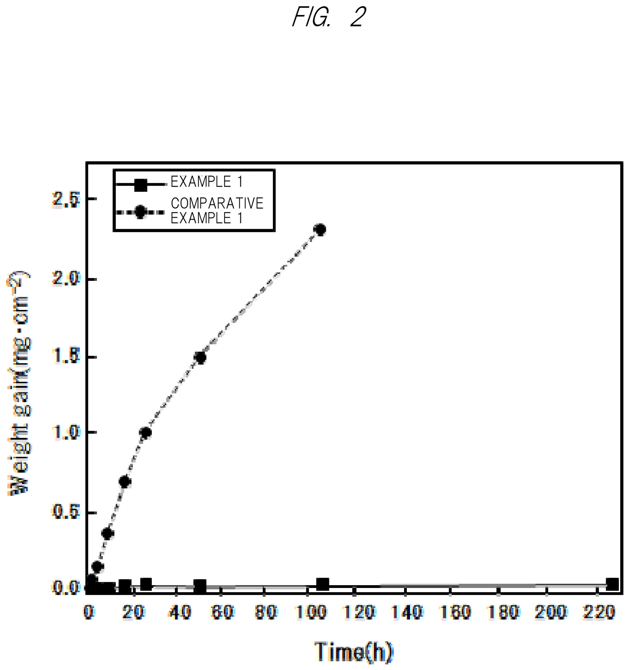

The results are shown in FIG. 2. FIG. 2 is a diagram showing mass gain curves of Example 1 and Comparative Example 1. In Comparative Example 1, the oxidation test was terminated after 100 hours since the mass gain was evaluated to be large enough. As shown in the drawing, in Comparative Example 1, oxidation proceeded over time and a large mass gain was observed, whereas in Example 1, although a temporary mass gain was initially observed, a significant mass gain was not shown thereafter.

In the results shown in FIG. 2, in a case in which the horizontal axis is plotted as the square root of time, the results are arranged in a straight line, and thus it is found that the mass gain is proportional to the square root of time. This indicates that the moving rate of oxygen is limited by diffusion, and means that the growth rate of an oxide film is inversely proportional to the thickness of the oxide film. In general, the coefficient of proportionality in this case is called an oxidation rate, and the unit is mg²cm⁻⁴h⁻¹.

The oxidation rate of the austenitic steel of Example 1 shown in FIG. 2 was 5.80×10⁻⁶ mg²cm⁻⁴h⁻¹ when calculated by the above method. Meanwhile, the same of Comparative Example 1 shown in FIG. 2 was 6.97×10⁻² mg²cm⁻⁴h⁻¹.

Cross sections of the samples of Example 1 and Comparative Example 1 were observed using EPMA with an electron probe microanalyzer (JEOL JXA-8530F), and it was possible to confirm that, in Comparative Example 1, the oxide coating film was formed thicker over time, whereas in Example 1, the oxide scale was extremely thin, and the change over time was small.

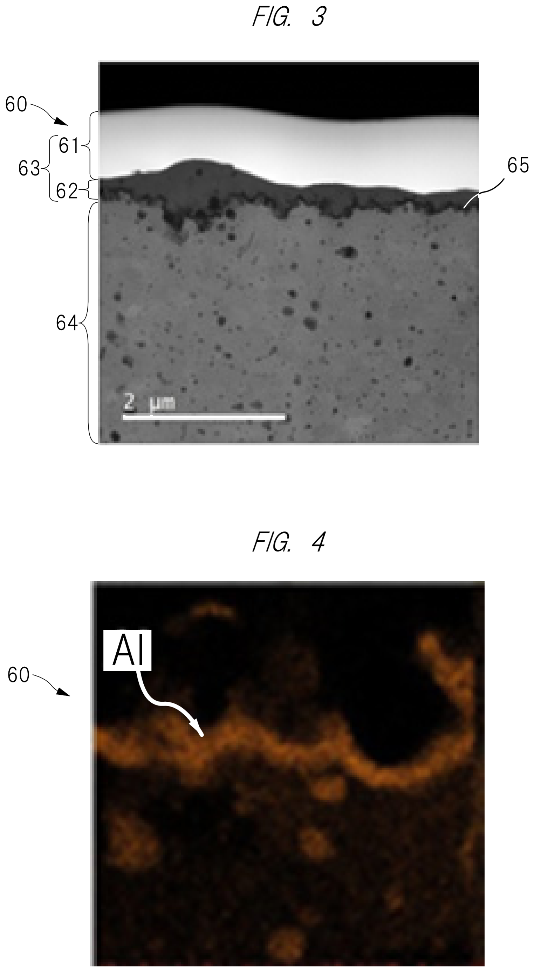

In addition, FIG. 3 shows an observation image of the sample of Example 1 obtained by a scanning transmission electron microscope (STEM). FIG. 4 is a diagram showing an observation image of the sample of Example 1 obtained by an energy dispersive X-ray analyzer (EDS). As shown in FIG. 3, austenitic steel (non-magnetic austenitic steel) 60 has a scale layer 63 including an oxide film 61 containing magnesium oxide as a main component and an oxide film 62 containing iron oxide as a main component. In addition, the austenitic steel 60 has an oxide coating film 65 continuously extending along the interface between a base material 64 and the scale layer 63. In addition, as shown in FIG. 4, since a large amount of Al is detected at a position corresponding to the oxide coating film 65 of FIG. 3, the oxide coating film 65 can be thought to be a dense aluminum oxide film.

That is, it was possible to confirm from FIGS. 3 and 4 that the austenitic steel 60 has the oxide coating film 65 containing aluminum oxide on the surface layer. It is strongly presumed that the improvement in oxidation resistance is due to this dense aluminum oxide film.

From the above description, it was found that the austenitic steel of the present embodiment has extremely excellent oxidation resistance at a high temperature.

### (Example 2)

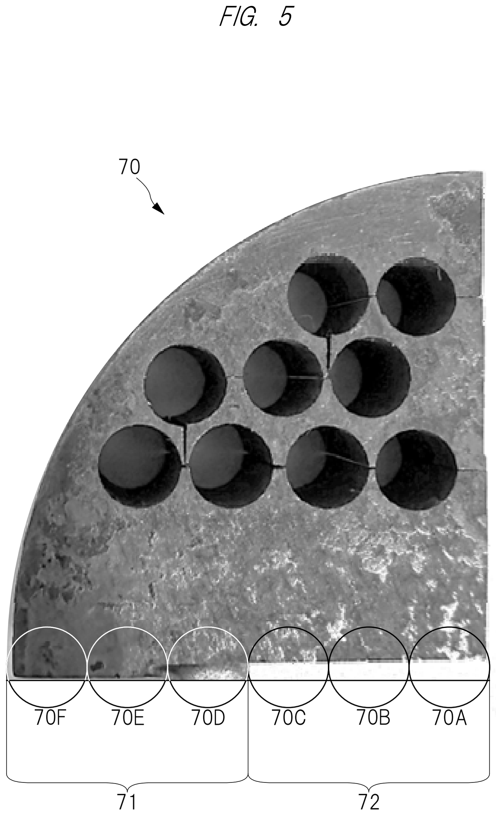

Raw material metals were vacuum-melted, and then hot-forged into a columnar shape to obtain a forged material 70 shown in FIG. 5. FIG. 5 is an explanatory view showing the forged material of austenitic steel manufactured as Example 2. The forged material 70 shown in FIG. 5 is austenitic steel having a composition of Fe-30Mn-5Al-1Si. The forged material 70 shown in FIG. 5 is obtained by dividing a cylindrical plate into four equal parts along two straight lines passing through the center of the circle and orthogonal to each other. The forged material 70 has a circumferential portion 71 including an outer edge of the circle and a central portion 72 positioned inside the circumferential portion 71 and including the center of the circle.

### [Evaluation of Influence of Thermal Aging]

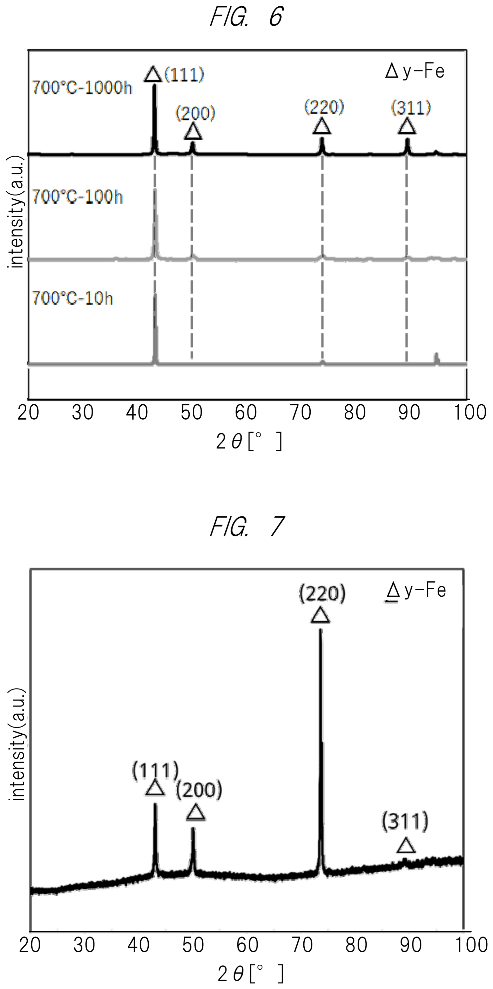

The forged material 70 shown in FIG. 5 was subjected to electrical discharge machining, and then die-cut into a columnar shape to prepare test pieces, and thermal aging was evaluated by holding the test pieces at a temperature of 700°C for 10 hours, 100 hours, and 1,000 hours. Thereafter, results obtained by evaluating the samples using an X-ray diffractometer are shown in FIG. 6. In addition, results (that is, evaluation results in a case in which the holding time is 0 hours) obtained by evaluating the test pieces of the forged material 70 before the thermal aging evaluation using an X-ray diffractometer are shown in FIG. 7. As shown in FIGS. 6 and 7, diffraction peaks of metal surfaces of the test pieces with changed holding times did not change. The results showed that austenite was stably present even when held at a high temperature (for example, 700 degrees Celsius) for a long period of time (for example, 1,000 hours).

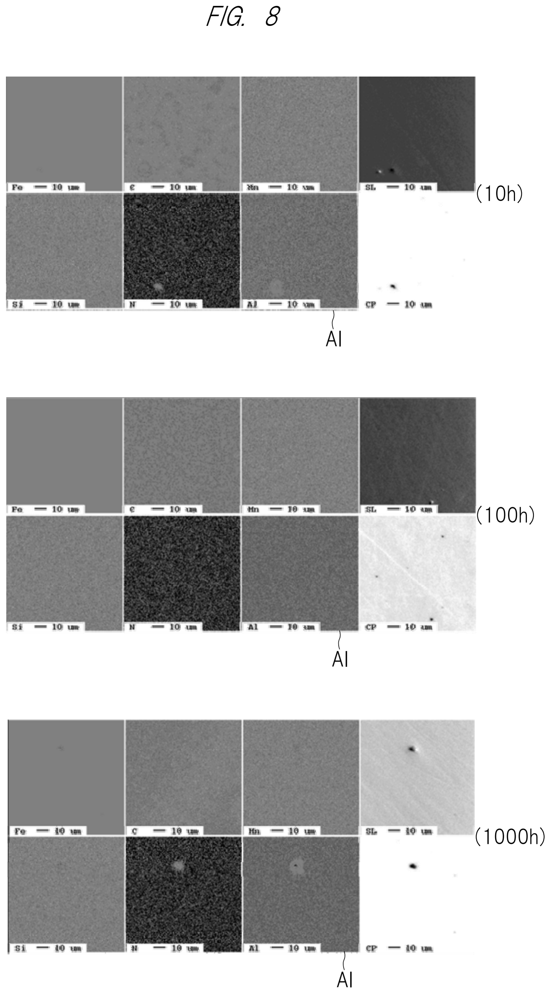

Furthermore, results obtained by analyzing the surfaces of the test pieces obtained by die-cutting the forged material 70 (see FIG. 5) into a columnar shape using an electron beam microanalyzer (EMPA) are shown in FIG. 8. As shown in FIG. 8, it can be seen that aluminum is uniformly dispersed on the surface of the test piece. From this fact, similarly to Example 1, it is thought that a coating film containing aluminum oxide is densely formed on the surface layer of the forged material 70 according to Example 2 after holding in a high temperature environment. In other words, it is inferred that the austenitic steel according to Example 2 exhibits high oxidation resistance due to the dense oxide coating film containing aluminum oxide formed on the surface layer, similarly to the austenitic steel according to Example 1.

### [Evaluation of Mechanical Characteristics of Minute Region]

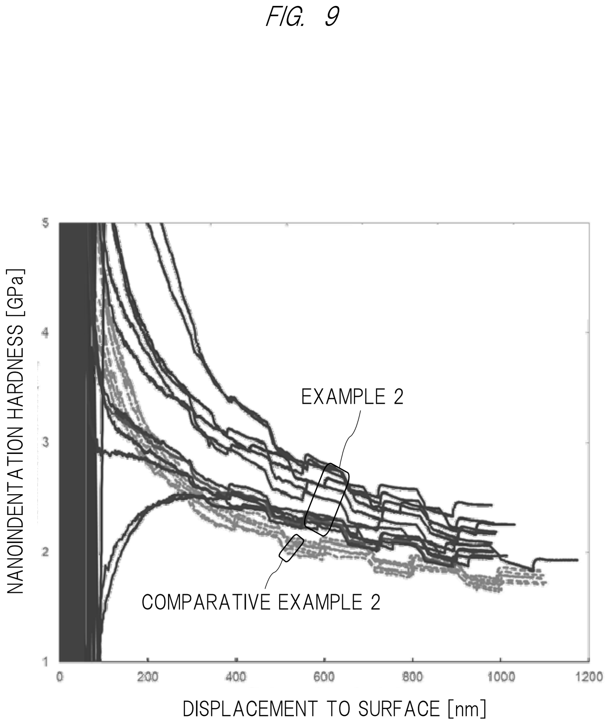

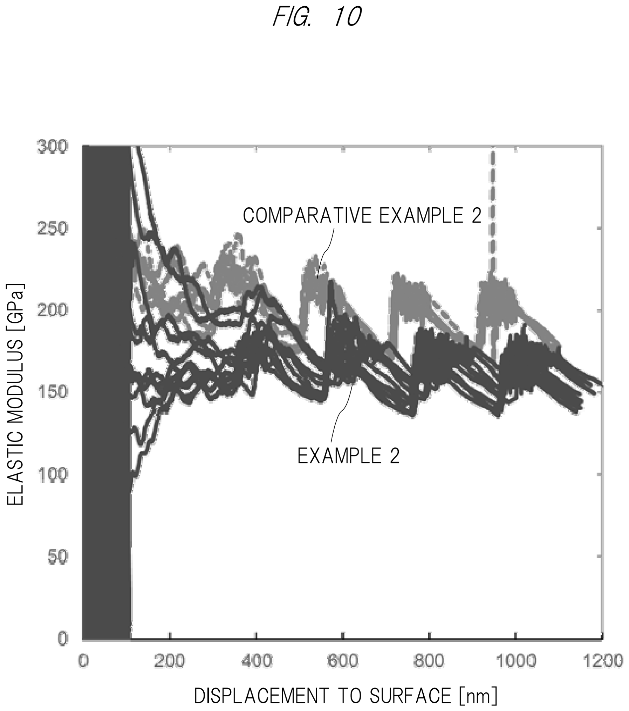

Mechanical characteristics of a minute region were evaluated using the forged material 70 (see FIG. 5) obtained in Example 2. More specifically, the evaluation was performed by pressing a diamond indenter or the like against the surface of the forged material and plotting an indentation load-displacement curve. The results are shown in FIGS. 9 and 10. FIG. 9 shows the results of evaluating the nanoindentation hardness, and FIG. 10 shows the results of evaluating the elastic modulus.

### (Comparative Example 2)

Here, as a comparative example for evaluating the mechanical strength of the austenitic steel according to Example 2, a single crystal of austenitic steel (chromium nickel-based stainless steel, corresponding to SUS316) having a composition of Fe-15Cr-20Ni was prepared. Similarly to Example 2, a diamond indenter or the like was pressed against the surface of the single crystal according to Comparative Example 2, and an indentation load-displacement curve was plotted. FIGS. 9 and 10 show the results of Comparative Example 2 together with the results of Example 2. The austenitic steel according to Comparative Example 2 shown in FIGS. 9 and 10 is used as an indicator of a standard mechanical strength of austenitic steel.

As shown in FIGS. 9 and 10, it is found that Example 2 has larger nanoindentation hardness and a lower elastic modulus than Comparative Example 2, that is, the austenitic steel according to Example 2 has a relatively higher mechanical strength than the austenitic steel according to Comparative Example 2. Comparative Example 2 is a single crystal, and has a crystal structure different from that of the austenitic steel according to Example 2 that is not a single crystal. In addition, the composition of Comparative Example 2 differs from the composition of Example 2 in the metals contained therein other than Fe. Therefore, accurate comparisons are difficult. However, similarly to Example 2, Comparative Example 2 has in common the fact that it does not contain C and Y₂O₃. Therefore, it is thought that the high Mn (instead of Cr and Ni) content and containing Al and Si as essential components will contribute to the mechanical strength. From the above-described results, it is presumed that austenitic steel having a high Mn content and containing Al and Si as essential components can obtain a higher mechanical strength than Comparative Example 2 even without containing C and Y₂O₃.

### [Evaluation Using X-ray Diffractometer]

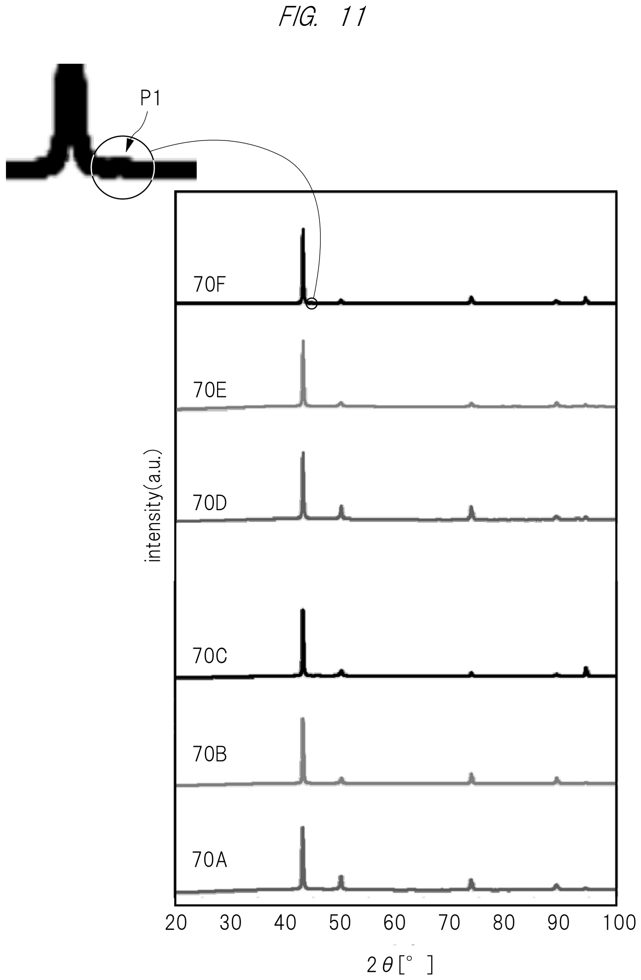

Next, each of the circumferential portion 71 and the central portion 72 of the forged material 70 shown in FIG. 5 was divided into three regions, and evaluation was performed using an X-ray diffractometer in each of a region 70F, a region 70E, a region 70D, a region 70C, a region 70B, and a region 70A. The evaluation results are shown in FIG. 11. As shown in FIG. 11, a peak P1 was confirmed in the region 70F, which is the outermost surface of the circumferential portion 71. A peak corresponding to the peak P1 was not confirmed in other regions. The peak P1 is a peak of aluminum nitride (AlN). That is, in Example 2, it was confirmed that aluminum nitride was present on the outermost surface of the circumferential portion 71, and that aluminum nitride was not thought to be distributed in regions other than the outermost surface.

The aluminum nitride may cause embrittlement. Accordingly, in a case in which the austenitic steel (that is, austenitic steel having a high Mn content and containing Al and Si as essential components) according to the present embodiment is machined, the outermost surface on the circumferential side containing aluminum nitride is preferably avoided (removed). Therefore, it is possible to produce a member having high toughness. As described above, aluminum is distributed throughout the forged material 70 (see FIG. 5). Therefore, even in a case in which the outermost surface on the circumferential side is removed, an oxide film containing aluminum oxide as a main component is formed on the surface layer of the forged material 70 if the forged material 70 is held in a high temperature environment. Therefore, it is thought that the oxidation resistance (corrosion resistance) already described is maintained even in a case in which the surface of the forged material is removed.

Next, as another indicator of the mechanical strength of austenitic steel, results of a tensile strength test will be described. Hereinafter, Example 3 and Comparative Example 3 will be described.

### (Example 3)

Austenitic steel having a composition of Fe-30Mn-6Al-1Si-1.5Y₂O₃ was obtained in the same manner as in Example 1.

### (Comparative Example 3)

Austenitic steel having a composition of Fe-30Mn-5Al-1Si-1.5Y₂O₃ was obtained in the same manner as in Example 1.

### [Mass Analysis]

Table 1 shows mass analysis results of the austenitic steels according to Example 3 and Comparative Example 3. As shown in Table 1, Example 3 and Comparative Example 3 are similar, except that the mass ratio of aluminum is different, and the mass ratio of Fe of a remainder is thus different. In the austenitic steel according to Comparative Example 3, the mass ratio of Al is less than 5 mass%. That is, the austenitic steel according to Comparative Example 3 will be described as a comparative example since the mass ratio of aluminum, which is an essential component, is less than the already described lower limit value.

In addition, in Table 1, carbon (C) is not positively added to each of the austenitic steels of Example 3 and Comparative Example 3. The carbon (C) component shown in Table 1 is the mass ratio of carbon unintentionally mixed due to contamination or the like during the manufacturing process. Since the mass ratio of carbon described in Table 1 is sufficiently smaller than the mass ratio of silicon (Si) and the mass ratio of yttrium (Y), it is thought that the influence of the carbon component contributing to the mechanical strength is substantially negligibly small. Therefore, even in a case in which the mass ratio of carbon shown in Table 1 is zero, the influence thereof on the results of the tensile strength test to be described below is thought to be negligibly small. In other words, each of Example 3 and Comparative Example 3 can be regarded as an example (and a comparative example) in which no carbon (C) is contained.

**[Table 1]**

| | MASS RATIO [wt%] | | | | | | |
|---|---|---|---|---|---|---|---|
| | Mn | Al | Si | Y | C | N | O |
| EXAMPLE 3 | 29.8-30.10 | 5.50-5.80 | 0.9-1.10 | 1.14-1.17 | 0.0933-0.136 | 0.0298-0.0605 | 0.391-0.49 |
| COMPARATIVE EXAMPLE 3 | 29.8-30.10 | 4.50-4.80 | 0.9-1.10 | 1.14-1.17 | 0.0933-0.136 | 0.0298-0.0605 | 0.391-0.49 |

### [Tensile Strength Test]

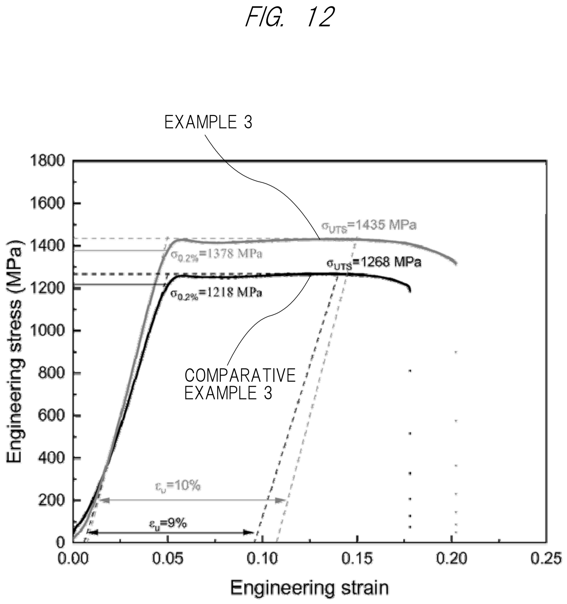

SS-J3 (thickness of parallel portion: 0.50 mm, length of parallel portion: 5.0 mm, width of parallel portion: 1.2 mm) minute tensile strength test pieces were collected from the austenitic steels according to Example 3 and Comparative Example 3. Then, the test piece was installed in a testing machine, and a pure plastic strain was evaluated at a temperature of 25°C and a strain rate of 6.67×10⁻⁴/s. The results are shown in FIG. 12.

The 0.2% yield strengths (σ_{0.2%}) of the austenitic steels according to Example 3 and Comparative Example 3 were 1,378 MPa and 1,218 MPa, respectively. In addition, the ultimate tensile strengths (σ_{UTS}) of the austenitic steels according to Example 3 and Comparative Example 3 were 1,435 MPa and 1,268 MPa, respectively. In addition, the fracture elongations (εᵤ) of the austenitic steels according to Example 3 and Comparative Example 3 were 9.0% and 10%, respectively.

From the test results shown in FIG. 12 and the results of 0.2% yield strength and ultimate tensile strength, it has been found that, in a case in which the mass ratios of Mn and Si contained in the austenitic steel are fixed, the mechanical strength of the austenitic steel can be improved by increasing the mass ratio of aluminum. In particular, the ultimate tensile strength of Example 3 is about 13% higher than the ultimate tensile strength of Comparative Example 3.

It has already been described that the mass ratio of aluminum is preferably 5 mass% or more from the viewpoint of improving the oxidation resistance (corrosion resistance) of the austenitic steel, but from the results shown in FIG. 9, it has been found that the mass ratio of aluminum is preferably 5 mass% or more, and particularly preferably 5.5 mass% or more from the viewpoint of improving the mechanical strength.

In Example 3, since the mass ratio of Mn is about 29.8 to 30.1 mass%, the austenite stability may be impaired in a case in which the mass ratio of aluminum becomes excessive while the mass ratio of Mn is fixed. However, it is thought that, by further increasing the mass ratio of Mn within a range not exceeding 31 mass%, it is possible to increase the mass ratio of aluminum up to 7 mass%.

The present invention is not limited to the embodiments and examples, and various changes can be made without departing from the gist of the present invention. For example, in FIG. 1, the helical fusion device has been described as an example of the magnetic confinement type fusion device, but the non-magnetic austenitic steel according to the embodiment can also be applied to a magnetic confinement type fusion device such as a tokamak type or a spheromak type.

In addition, for example, in the example described with reference to FIG. 1, the fusion device 1 including the blanket 20 and the diverter 30 has been described. As a modification of the fusion device 1, a type of fusion device having no diverter 30 can be applied. In this case, the blanket 20 also serves as the diverter 30.

In addition, for example, although various modifications have been described above, a part of the embodiment can be applied in combination with other embodiments.

### INDUSTRIAL APPLICABILITY

The present invention is applicable to, for example, a magnetic confinement type fusion device.

### REFERENCE SIGNS LIST

- 1: Fusion device
- 10: Vacuum vessel
- 20: Blanket
- 21: Fusion plasma
- 30: Diverter
- 31: Diverter plasma
- 40: Magnet
- 50: Cryostat
- 60: Austenitic steel (non-magnetic austenitic steel)
- 61: Oxide film
- 62: Oxide film
- 63: Scale layer
- 64: Base material
- 65: Oxide coating film
- 70: Forged material
- 70A, 70B, 70C, 70D, 70E, 70F: Region
- 71: Circumferential portion
- 72: Central portion

## Claims

1. Non-magnetic austenitic steel comprising: 28 mass% or more and 31 mass% or less of Mn; 5 mass% or more and 7 mass% or less of Al; 0.5 mass% or more and 2 mass% or less of Si; 0 mass% or more and 0.3 mass% or less of C; 0 mass% or more and 1.5 mass% or less of Y₂O₃; and a remainder of Fe and unavoidable impurities.

2. The non-magnetic austenitic steel according to Claim 1, wherein a permeability of the non-magnetic austenitic steel is 1.02 or less.

3. The non-magnetic austenitic steel according to Claim 1, wherein a coating film containing aluminum oxide is provided on a surface layer.

4. A magnetic confinement type fusion device comprising:
a first component containing non-magnetic austenitic steel,
wherein the non-magnetic austenitic steel contains 28 mass% or more and 31 mass% or less of Mn, 5 mass% or more and 7 mass% or less of Al, 0.5 mass% or more and 2 mass% or less of Si, 0 mass% or more and 0.3 mass% or less of C, 0 mass% or more and 1.5 mass% or less of Y₂O₃, and a remainder of Fe and unavoidable impurities.

5. The magnetic confinement type fusion device according to Claim 4,
wherein a permeability of the non-magnetic austenitic steel is 1.02 or less.

6. The magnetic confinement type fusion device according to Claim 4,
wherein a coating film containing aluminum oxide is provided on a surface layer.

7. The magnetic confinement type fusion device according to Claim 4,
wherein the first component is a blanket.

8. The magnetic confinement type fusion device according to Claim 4,
wherein the first component is a diverter.
